# EUROPEAN PATENT APPLICATION

(11) **EP 4 811 056 A1**
(43) Date of publication of application: **23.09.2026**
(21) Application number: 26164415.7
(22) Date of filing: 12.03.2026
(51) Int. Cl.: G05B 19/05, G03G 15/00

(54) **SAFETY DEVICE AND IMAGE FORMING APPARATUS**

(30) Priority: 21.03.2025 JP 2025046746
(71) Applicant: Kyocera Document Solutions Inc., Osaka-shi, Osaka 540-8585 (JP)
(72) Inventor: YAMAUCHI, Hironori, Osaka, 540-8585 (JP)
(74) Representative: BRP Renaud & Partner mbB Rechtsanwälte Patentanwälte Steuerberater

(57) **Abstract**

In a safety device (200), a disconnection circuit (60) disconnects a second operation voltage line (L2), thereby disconnecting supply of drive power and a relay operation voltage from a power source, when an abnormality signal is inputted from an abnormality detector (50), with the relay operation voltage and the drive power being supplied to a safety circuit (42) through the second operation voltage line (L2) and a drive power line (L3), and resumes the supply of the drive power and the relay operation voltage to the safety circuit (42), by making the second operation voltage line (L2) electrically continuous, when the abnormality signal ceases to be inputted, with the relay operation voltage and the drive power being disconnected. The safety circuit (42) resumes the supply of the relay operation voltage to the relay circuit (32) through a first operation voltage line (L1), upon executing a cancelling operation, after the supply of the drive power and the relay operation voltage to the safety circuit (42) is resumed.

## Description

### BACKGROUND

The present invention relates to a safety device and an image forming apparatus, and in particular to a technique to secure safety, when abnormality occurs in a load.

Industrial machines incorporated with a programmable logic controller (PLC) are known. For example, the PLC is employed in a system that controls the operation of a drive motor of a belt conveyor.

The PLC is also employed in a system for handling high-level risk. The PLC shuts off the power supply in response to a press of an emergency stop switch by the user, thereby disconnecting the power to a load, and keeps the power to the load disconnected even after the power supply is recovered, until the user cancels the disconnected state, for example by pressing a reset button.

### SUMMARY

The invention proposes further improvement of the foregoing techniques.
In an aspect, the invention provides a safety device including a load, a relay circuit, a first operation voltage line, an emergency stop switch, a safety circuit, an abnormality detector, a second operation voltage line, a drive power line, a disconnection circuit, and a controller. The load operates with power supplied thereto. The relay circuit turns on power to the load, when a predetermined relay operation voltage is supplied, and turns off the power to the load, when the relay operation voltage is not supplied. The first operation voltage line is for supplying the relay operation voltage to the relay circuit. The safety circuit is connected to the relay circuit via the first operation voltage line, to control supply status of the relay operation voltage to the relay circuit, and shuts off the power supply when a stop signal is inputted from the emergency stop switch, thereby disconnecting the supply of the relay operation voltage to the relay circuit through the first operation voltage line. The abnormality detector outputs an abnormality signal indicating abnormality of the load, upon detecting the abnormality of the load. The second operation voltage line is for supplying the relay operation voltage to the safety circuit. The drive power line is connected to the second operation voltage line, to supply drive power to the safety circuit. The disconnection circuit is connected to a power source that supplies the relay operation voltage and the drive power, and to the second operation voltage line, and controls electrical continuity of the second operation voltage line. The controller includes a processor, and controls operation of the disconnection circuit, when the processor executes a control program. The disconnection circuit disconnects the second operation voltage line, thereby disconnecting the supply of the drive power and the relay operation voltage from the power source, when the abnormality signal is inputted from the abnormality detector, with the relay operation voltage and the drive power being supplied to the safety circuit through the second operation voltage line and the drive power line. When the abnormality signal ceases to be inputted from the abnormality detector, with the supply of the relay operation voltage and the drive power being suspended, the disconnection circuit resumes the supply of the drive power and the relay operation voltage to the safety circuit, by making the second operation voltage line electrically continuous. The safety circuit resumes, upon executing a predetermined cancelling operation, with the supply of the drive power and the relay operation voltage to the safety circuit having been resumed, the supply of the relay operation voltage to the relay circuit through the first operation voltage line.

In another aspect, the invention provides an image forming apparatus including the foregoing safety device, an image forming device, and a fixing device. The image forming device forms a toner image on a sheet. The fixing device includes a fixing material and a presser that define a nip region for pinching the sheet having the toner image formed thereon, and a heater acting as a load that heats the fixing material. The abnormality detector includes a temperature sensor that detects a high-temperature state of the heater, as the abnormality of the load.

### BRIEF DESCRIPTION OF THE DRAWINGS

Fig. 1 is a front cross-sectional view showing a structure of an image forming apparatus;
Fig. 2 is a block diagram showing an internal configuration of the image forming apparatus;
Fig. 3 is a schematic cross-sectional view showing a fixing device;
Fig. 4 is a circuit diagram showing an electrical configuration of the safety device according to the embodiment; and
Fig. 5 is a circuit diagram showing an electrical configuration of a safety device according to a comparative example to the embodiment.

### DETAILED DESCRIPTION

Hereafter, an image forming apparatus, incorporated with a safety device according to an embodiment of the invention, will be described with reference to the drawings.

### Configuration of Image Forming Apparatus 1

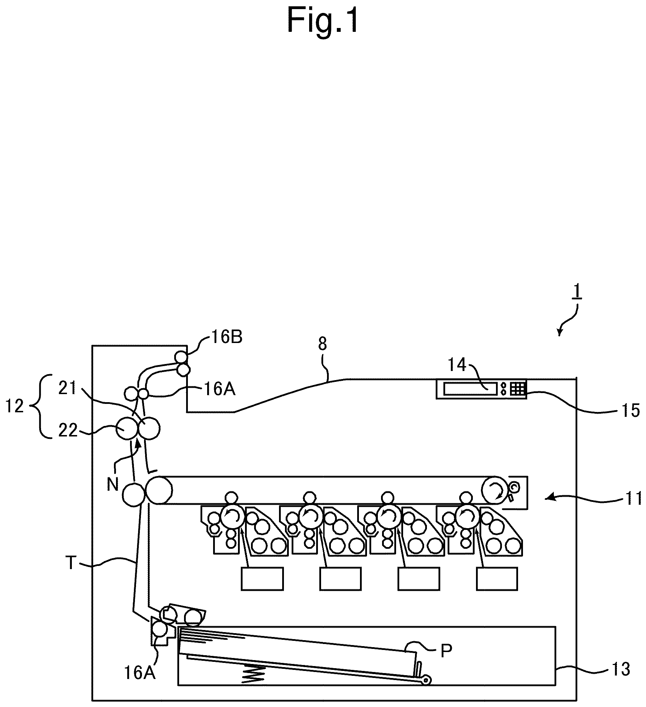

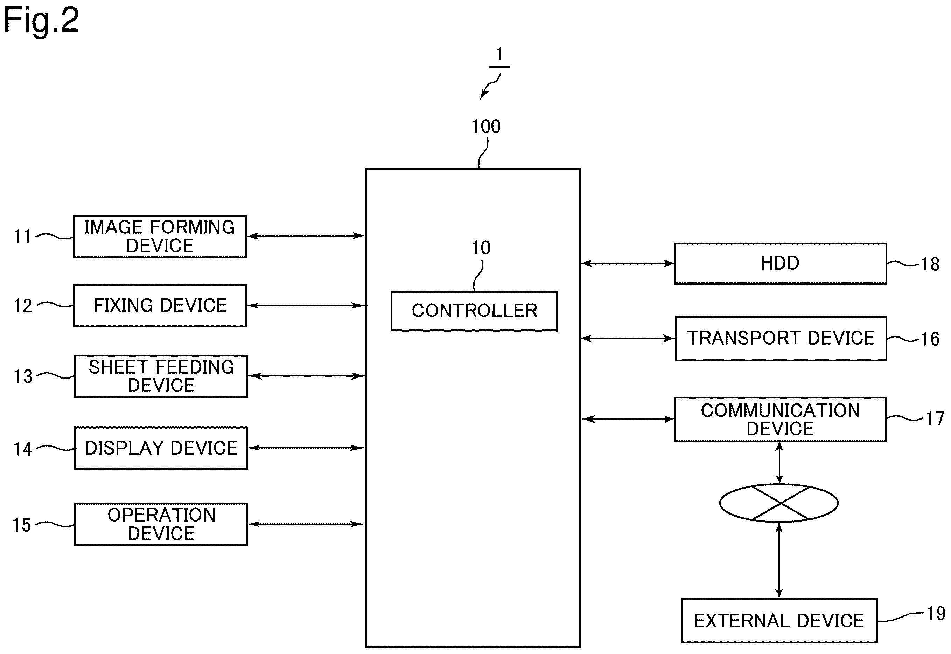

Fig. 1 is a front cross-sectional view showing a structure of the image forming apparatus 1. Fig. 2 is a block diagram showing an internal configuration of the image forming apparatus 1. As shown in Fig. 1 and Fig. 2, the image forming apparatus 1 includes an image forming device 11, a fixing device 12, a sheet feeding device 13, a display device 14, an operation device 15, a transport device 16, a communication device 17, a hard disk drive (HDD) 18, and a control circuit 100.

The image forming device 11 includes a photoconductor drum, a charging device, an exposure device, a developing device, and a transfer device. The image forming device 11 forms a colored toner image, by electrophotography, on a sheet P delivered from the sheet feeding device 13, on the basis of image data, for example acquired from an external device via the communication device 17.

The fixing device 12 heats and presses the sheet P on which the toner image has been formed, to thereby fix the toner image onto the sheet P. The sheet P on which the image has been formed by fixing the toner image is delivered to an output tray 8. Further detail of the configuration of the fixing device 12 will be subsequently described.

The sheet feeding device 13 includes a sheet cassette. The sheet feeding device 13 draws out the sheets P stored in the sheet cassette one by one with a pickup roller, and delivers the sheet P to the transport route T. Here, the sheet P is not limited to a paper medium but may be, for example, an overhead projector (OHP) sheet.

The display device 14 includes a liquid crystal display or an organic light-emitting diode display, and displays various types of screen.

The operation device 15 includes a plurality of hard keys, such as a menu key for invoking a menu, and a start key for inputting instructions to execute a printing operation. The operation device 15 also includes a touch panel overlaid on the display device 14. To the operation device 15, the instruction from the user is inputted.

The transport device 16 includes transport roller pairs 16A, a delivery roller pair 16B, and a transport motor. When the transport roller pair 16A and the delivery roller pair 16B are driven to rotate by the transport motor, the sheet P delivered from the sheet feeding device 13 is transported along the transport route T.

The communication device 17 includes a communication module such as a local area network (LAN) board. The controller 10 of the control circuit 100, to be subsequently described, performs data communication via the communication device 17, with an external device 19 such as a personal computer (PC) connected via a network.

The HDD 18 is a large-capacity storage medium for storing various types of data. In the HDD 18, various control programs for realizing the functions of the image forming apparatus 1 are stored.

The control circuit 100 includes a processor, a random-access memory (RAM), and a read-only memory (ROM). The processor is, for example, a central processing unit (CPU), a micro processing unit (MPU), or an application specific integrated circuit (ASIC).

The control circuit 100 acts as a controller 10, when the processor executes a control program stored in the ROM or the HDD 18. The controller 10 controls the operation of the components of the image forming apparatus 1. Here, the controller 10 may be constituted in the form of a logic circuit, instead of being realized by the operation based on the control program.

The control circuit 100 is electrically connected to the image forming device 11, the fixing device 12, the sheet feeding device 13, the display device 14, the operation device 15, the transport device 16, the communication device 17, and the HDD 18.

A power source is connected to each of the components of the image forming apparatus 1. When the user turns the power on, the power is supplied from the power source, to each of the components of the image forming apparatus 1.

### Configuration of Fixing Device 12

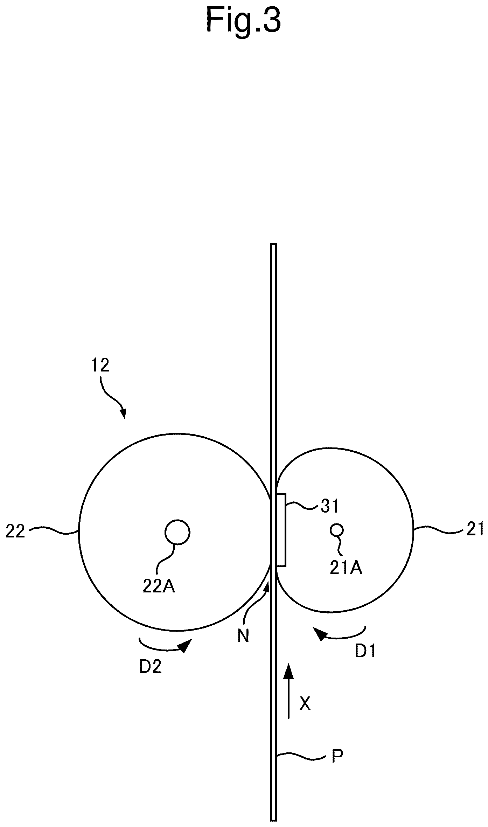

As shown in Fig. 3, the fixing device 12 includes a fixing belt 21, exemplifying the fixing material, a presser 22, and a heater 31 exemplifying the load.

The fixing belt 21 rotates clockwise as indicated by an arrow D1, about a rotation shaft 21A. The presser 22 rotates counterclockwise as indicated by an arrow D2, about a rotation shaft 22A. The presser 22 is pressed against the outer surface of the fixing belt 21, to define a nip region N in collaboration with the fixing material 21, to pinch therebetween the sheet P having the toner image formed thereon.

The heater 31 is provided in contact with the inner surface of the fixing belt 21. The heater 31 heats the fixing belt 21. The heater 31 is constituted of a heating element such as a ceramic plane heater or a halogen lamp.

The fixing device 12 pinches the sheet P having the toner image formed thereon, transported in the direction indicated by an arrow X, in the nip region N, and heats and presses the sheet P, thereby fixing the toner image.

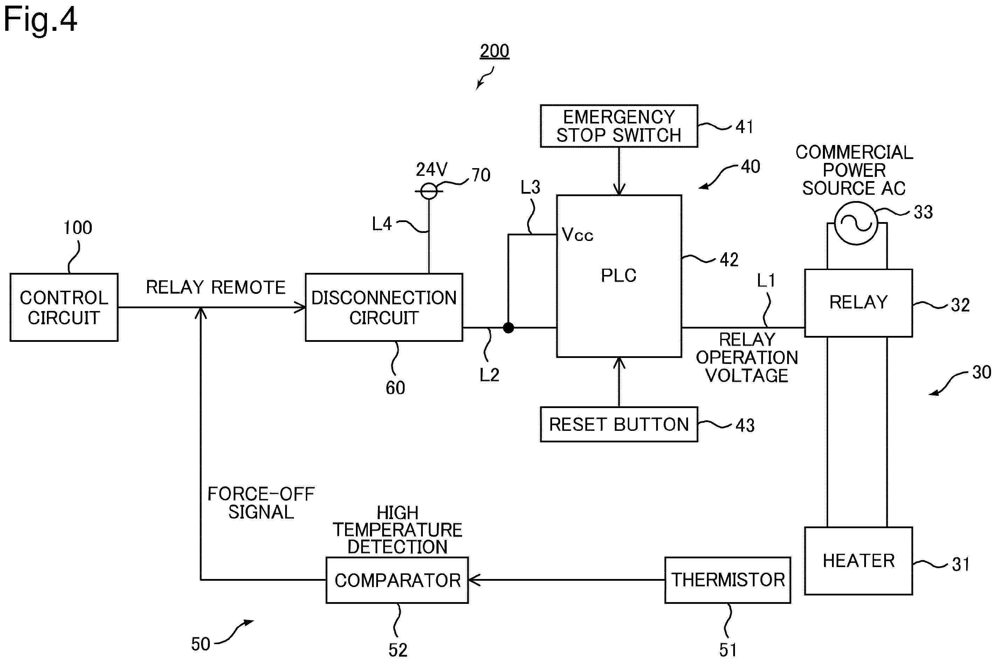

Fig. 4 illustrates the electrical configuration of the safety device 200. As shown in Fig. 4, the safety device 200 includes a heater circuit 30, an emergency stop circuit 40, an abnormality detector 50, a disconnection circuit 60, and a control circuit 100.

### Heater Circuit 30

The heater circuit 30 includes a heater 31, a relay circuit 32, a commercial power source 33, and a first operation voltage line L1 for supplying a relay operation voltage to the relay circuit 32. The heater 31 is electrically connected to the commercial power source 33, via the relay circuit 32. The heater 31 is activated by AC power supplied from the commercial power source 33.

The relay circuit 32 is connected to one end of the first operation voltage line L1. The relay circuit 32 turns on the power supply to the heater 31, when the relay operation voltage of 24.0 volts is supplied through the first operation voltage line L1, and turns off the power supply to the heater 31, when the relay operation voltage of 24.0 volts is not supplied through the first operation voltage line L1.

When the relay circuit 32 is on, the AC power is supplied to the heater 31, so that the heater 31 is activated. When the relay circuit 32 is off, the supply of the AC power to the heater 31 is suspended, and the heater 31 stops working.

### Emergency Stop Circuit 40

The emergency stop circuit 40 includes an emergency stop switch 41, a PLC 42 exemplifying the safety circuit, a reset button 43, a second operation voltage line L2, and a drive power line L3.

The second operation voltage line L2 is for supplying the relay operation voltage to the PLC 42. The second operation voltage line L2 has one end connected to the disconnection circuit 60, and the other end connected to the input terminal of the PLC 42.

The drive power line L3 is for supplying drive power to the PLC 42. The drive power line L3 has one end connected to the second operation voltage line L2, and the other end connected to the power supply unit of the PLC 42.

The input terminal of the PLC 42 is also electrically connected to the emergency stop switch 41 and the reset button 43, in addition to the second operation voltage line L2.

The output terminal of the PLC 42 is connected to the other end of the first operation voltage line L1. Accordingly, the PLC 42 is connected to the relay circuit 32, through the first operation voltage line L1.

The PLC 42 is programmed so as to control the supply status of the relay operation voltage to the relay circuit 32. To be more specific, when the user presses the emergency stop switch 41, so that a stop signal is inputted from the emergency stop switch 41, the PLC 42 shuts off the power supply from the power source, thereby disconnecting the supply of the relay operation voltage to the relay circuit 32 through the first operation voltage line L1.

When the power source is recovered, for example because of the user having stopped pressing the emergency stop switch 41, with the supply of the relay operation voltage to the relay circuit 32 being suspended as above, and further the reset button 43 is pressed so that the reset signal is inputted from the reset button 43, the PLC 42 executes a resetting operation, an example of the predetermined cancelling operation, including resetting the operation of the PLC 42. Upon executing the resetting operation, the PLC 42 resumes the supply of the relay operation voltage to the relay circuit 32, through the first operation voltage line L1.

### Abnormality Detector 50

The abnormality detector 50 includes a thermistor 51 and a comparator 52. Upon detecting a high temperature of the heater 31, which is an abnormal state of the heater 31, the abnormality detector 50 outputs an abnormality signal indicating that the heater 31 is suffering the abnormal state.

The thermistor 51 is located close to the heater 31. The thermistor 51 detects the temperature of the heater 31, and outputs a voltage proportional to the detection result, to the comparator 52. Thus, the thermistor 51 acts as the temperature sensor that detects the high-temperature state of the heater 31.

The comparator 52 compares the voltage outputted from the thermistor 51 with a reference voltage, and outputs, when the output voltage becomes equal to or higher than the reference voltage (i.e., when the high-temperature state of the heater 31 is detected), a force-off signal, an example of the abnormality signal, to the disconnection circuit 60. When the output voltage of the thermistor 51 is lower than the reference voltage (i.e., while the high-temperature state of the heater 31 is not detected), the comparator 52 outputs an on-signal to the disconnection circuit 60.

### Disconnection Circuit 60

The disconnection circuit 60 is connected to a DC power source 70 that supplies the relay operation voltage and the drive power, through a power source line L4. The disconnection circuit 60 is connected to one end of the second operation voltage line L2. The disconnection circuit 60 controls the electrical continuity of the second operation voltage line L2.

To be more specific, when the force-off signal is inputted from the abnormality detector 50, with the relay operation voltage and the drive power being supplied to the PLC 42 through the second operation voltage line L2 and the drive power line L3, the disconnection circuit 60 disconnects the second operation voltage line L2, to suspend the supply of the drive power and the relay operation voltage from the DC power source 70.

When the on-signal is inputted from the abnormality detector 50 (i.e., when the force-off signal stops being inputted from the abnormality detector 50), with the supply of the relay operation voltage and the drive power being suspended, the disconnection circuit 60 resumes the supply of the drive power and the relay operation voltage to the PLC 42, by making the second operation voltage line L2 electrically continuous.

When the user presses the reset button 43, to input the reset signal from the reset button 43, with the supply of the drive power and the relay operation voltage to the PLC 42 having been resumed, the controller of the PLC 42 executes the resetting operation, exemplifying the predetermined cancelling operation. Upon executing the resetting operation, the PLC 42 resumes the supply of the relay operation voltage to the relay circuit 32, through the first operation voltage line L1.

### Control Circuit 100

The controller 10 of the control circuit 100 controls the operation of the disconnection circuit 60, by outputting thereto a first signal instructing to make the second operation voltage line L2 electrically continuous, or a second signal instructing to disconnect the second operation voltage line L2.

The image forming apparatus, an example of the industrial machines, includes the abnormality detector, for preventing fuming or ignition arising from thermal runaway of the heater provided in the fixing device or drying device. Upon detecting the high-temperature state of the heater, the abnormality detector turns off the relay circuit, which turns on or off the power supply to the heater, and turns on the relay circuit, upon stopping detection of the high-temperature state of the heater.

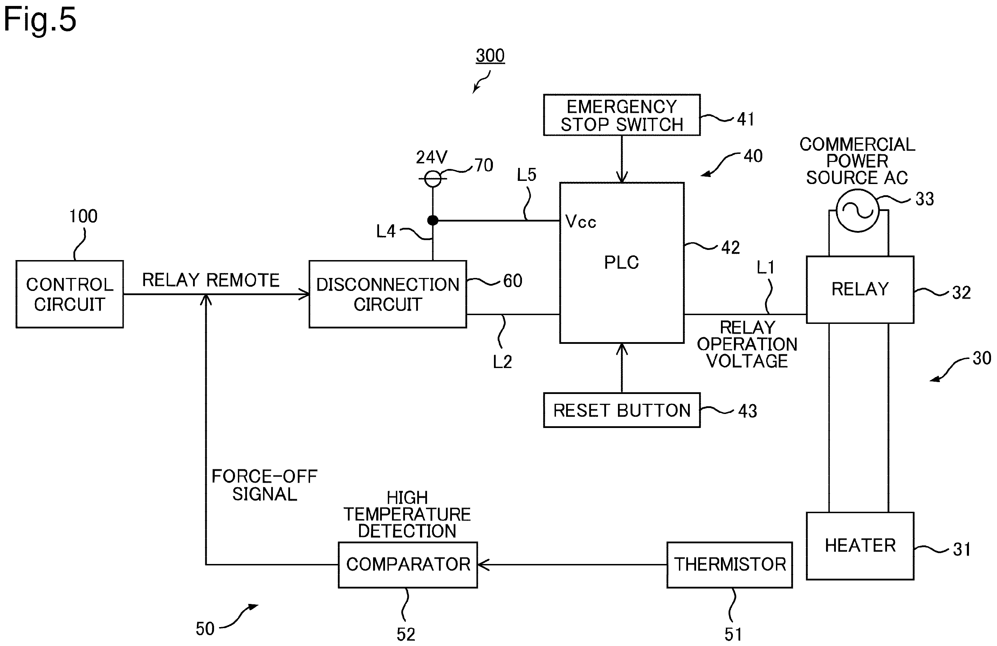

Fig. 5 illustrates the electrical configuration of a safety device 300, which is a comparative example to the embodiment. In the safety device 300, as shown in Fig. 5, a drive power line L5 for supplying the drive power to the PLC 42 is not connected to the second operation voltage line L2, which can be disconnected by the disconnection circuit 60.

The drive power line L5 has one end connected to the power source line L4, and the other end connected to the power supply unit of the PLC 42. Thus, the drive power line L5 and the second operation voltage line L2 each constitute an independent voltage line, in the safety device 300.

In the safety device 300, when the disconnection circuit 60 disconnects the second operation voltage line L2, in response to the force-off signal from the abnormality detector 50, the supply of the drive power to the PLC 42 through the drive power line L5 is not suspended, although the supply of the relay operation voltage to the relay circuit 32 through the second operation voltage line L2 is suspended.

In this case, when the disconnection circuit 60 makes the second operation voltage line L2 electrically continuous, in response to the on-signal inputted from the abnormality detector 50, since the power source of the PLC 42 has not been shut off, the supply of the relay operation voltage to the relay circuit 32 through the second operation voltage line L2 is resumed, without the cancelling operation being executed by the PLC 42.

In the safety device 300, therefore, when the temperature of the heater 31 excessively rises for some reason, the relay circuit 32 is repeatedly turned on and off, by the signal from the abnormality detector 50. When a large current flows in the relay circuit 32 under such situation, by which a spark is produced between the contacts, and the contacts are fused, the relay circuit 32 becomes unable to be turned off, and the safety protection function of the heater 31 may be lost.

The mentioned known technique is not designed to secure safety in the event that an abnormality occurs in the load, and therefore unable to solve the mentioned drawback.

In contrast, in the safety device 200 according to the embodiment, the drive power line L3 for supplying the drive power to the PLC 42 is connected to the second operation voltage line L2, which can be disconnected by the disconnection circuit 60. In other words, the drive power line L3 and the second operation voltage line L2 constitute the common voltage line.

Accordingly, when the disconnection circuit 60 once disconnects the second operation voltage line L2, because of the abnormality of the heater 31 (i.e., high temperature) having been detected, the supply of the drive power to the PLC 42 is suspended. Therefore, even though the disconnection circuit 60 makes the second operation voltage line L2 electrically continuous, because of the abnormality of the heater 31 having stopped being detected, since the supply of the drive power is suspended, the supply of the relay operation voltage to the relay circuit 32 is not resumed, until the predetermined cancelling operation is executed (until the resetting operation is executed in response to the press of the reset button 43 by the user).

As a result, the relay circuit 32 can be prevented from repeatedly being turned on and off, owing to the occurrence of the abnormality in the heater 31, and therefore the safety protection function of the heater 31 can be maintained, despite the occurrence of the abnormality in the heater 31.

According to the embodiment, the abnormality detector 50 includes the thermistor 51 that detects the high-temperature state of the heater 31, which is a typical example of the abnormality of the load. Such a configuration further assures that the abnormality of the heater 31 is detected without fail.

According to the embodiment, when the reset signal from reset button 43 is inputted, the PLC 42 resets the operation thereof, as the cancelling operation, and resumes the supply of the relay operation voltage to the relay circuit 32, through the first operation voltage line L1. Therefore, the user can easily resume the operation of the heater 31, when the abnormality of the heater 31 is resolved.

According to the embodiment, further, the safety circuit is constituted of the programmable logic controller (PLC). Therefore, the reliability of the emergency stop circuit 40 is upgraded.

### Other Variations

In the foregoing embodiment, the load is exemplified by the heater 31 provided in the fixing device 12 of the electrophotographic image forming apparatus 1. However, the invention is not limited to such embodiment. For example, the load may be a heater provided in a drying device that dries an ink image formed on the sheet, by an inkjet printer.

In the foregoing embodiment, the predetermined cancelling operation is exemplified by the resetting operation, executed in response to the press of the reset button 43 by the user. However, the invention is not limited to such embodiment. For example, the cancelling operation may be a resetting operation executed in response to a cancelling instruction, inputted through an on-line remote operation. In this case, the PLC 42 executes the resetting operation, when the communication device 17 receives the cancelling instruction transmitted from the external device 19.

Further, although the PLC 42 is employed to constitute the emergency stop circuit 40, according to the foregoing embodiment, the invention is not limited to such embodiment. For example, the emergency stop circuit 40 may include, in place of the PLC 42, a relay module without programmability, but having the same function as the PLC 42.

The invention may be modified in various manners, without limitation to the foregoing embodiments. For example, although the image forming apparatus 1 is exemplified by the color printer in the embodiments, the invention is also applicable to other types of image forming apparatus, such as a monochrome printer, a color multifunction peripheral, a monochrome multifunction peripheral, a copier, or a facsimile machine.

Further, the configurations and processings described in the embodiments with reference to Fig. 1 to Fig. 5 are merely exemplary, and in no way intended to limit the invention to those configurations and processings.

## Claims

1. A safety device (200) comprising:
a load (31) that operates with power supplied thereto;
a relay circuit (32) that turns on power to the load (31), when a predetermined relay operation voltage is supplied, and turns off the power to the load (31), when the relay operation voltage is not supplied;
a first operation voltage line (L1) for supplying the relay operation voltage to the relay circuit (32);
an emergency stop switch (41);
a safety circuit (42) connected to the relay circuit (32) via the first operation voltage line (L1), to control supply status of the relay operation voltage to the relay circuit (32), and configured to shut off the power supply when a stop signal is inputted from the emergency stop switch (41), thereby disconnecting the supply of the relay operation voltage to the relay circuit (32) through the first operation voltage line (L1);
an abnormality detector (50) that outputs an abnormality signal indicating abnormality of the load (31), upon detecting the abnormality of the load (31);
a second operation voltage line (L2) for supplying the relay operation voltage to the safety circuit (42);
a drive power line (L3) connected to the second operation voltage line (L2), to supply drive power to the safety circuit (42);
a disconnection circuit (60) connected to a power source that supplies the relay operation voltage and the drive power, and to the second operation voltage line (L2), and configured to control electrical continuity of the second operation voltage line (L2); and
a controller (10) that includes a processor, and controls operation of the disconnection circuit (60), when the processor executes a control program,
wherein the disconnection circuit (60) is configured to:
disconnect the second operation voltage line (L2), thereby disconnecting the supply of the drive power and the relay operation voltage from the power source, when the abnormality signal is inputted from the abnormality detector (50), with the relay operation voltage and the drive power being supplied to the safety circuit (42) through the second operation voltage line (L2) and the drive power line (L3); and
resume the supply of the drive power and the relay operation voltage to the safety circuit (42), by making the second operation voltage line (L2) electrically continuous, when the abnormality signal ceases to be inputted from the abnormality detector (50), with the supply of the relay operation voltage and the drive power being suspended, and
the safety circuit (42) resumes, upon executing a predetermined cancelling operation, with the supply of the drive power and the relay operation voltage to the safety circuit (42) having been resumed, the supply of the relay operation voltage to the relay circuit (32) through the first operation voltage line (L1).

2. The safety device (200) according to claim 1, further comprising a reset button (43),
wherein, when a reset signal from the reset button (43) is inputted, the safety circuit (42) resets operation thereof, as the cancelling operation, and resumes the supply of the relay operation voltage to the relay circuit (32), through the first operation voltage line (L1).

3. The safety device (200) according to claim 1,
wherein the safety circuit (42) includes a programmable logic controller (PLC).

4. The safety device (200) according to claim 1, further comprising a communication device (17) that communicates with an external device (19) via a network,
wherein the safety circuit (42) resets operation thereof, as the cancelling operation, when the communication device (17) receives a cancelling instruction transmitted from the external device (19), and resumes the supply of the relay operation voltage to the relay circuit (32), through the first operation voltage line (L1).

5. An image forming apparatus (1) comprising:
the safety device (200) according to any one of claim 1 to claim 3;
an image forming device (11) that forms a toner image on a sheet;
a fixing device (12) including a fixing material and a presser that define a nip region for pinching the sheet having the toner image formed thereon, and a heater acting as the load (31) that heats the fixing material,
wherein the abnormality detector (50) includes a temperature sensor (51) that detects a high-temperature state of the heater, as the abnormality of the load (31).
